# EUROPÄISCHE PATENTANMELDUNG

(11) **EP 2 421 105 A2**
(43) Veröffentlichungstag der Anmeldung: **22.02.2012**
(21) Anmeldenummer: 11006306.2
(22) Anmeldetag: 30.07.2011
(51) Int. Cl.: H02G 3/08, H02G 3/22

(54) **Vorrichtung zur Durchführung von Kabeln**

(30) Priorität: 21.08.2010 DE 102010035074
(71) Anmelder: Pflitsch GmbH & Co. KG., 42499 Hückeswagen (DE)
(72) Erfinder: Jung, Volker, 53804 Much (DE); Koburg, Dirk, 42859 Remscheid (DE)
(74) Vertreter: Köchling, Conrad-Joachim

(57) **Zusammenfassung**

Um eine Vorrichtung zur Durchführung von Kabeln (1) durch eine Gehäusewandung, bestehend aus einer Hülse (2), die von einem Kabel (1) durchgriffen ist, wobei die Hülse (2) an einem ersten Endbereich einen Befestigungsansatz (3) aufweist und einen Mittelbereich (4) aufweist, der gegen den Mantel eines durchgesteckten Kabels (1) verquetschbar ist, zu schaffen, die spritzwasserdicht ist, wird vorgeschlagen, dass der dem Befestigungsansatz (3) abgewandte zweite Endbereich (5) in Montagesolllage einen ringartigen Dichtkörper (6) aufnimmt, der sich am Mantel des durchgesteckten Kabels (1) oder Langformteils abstützt.

## Beschreibung

Vorrichtung zur Durchführung von Kabeln

Die Erfindung betrifft eine Vorrichtung zur Durchführung von Kabeln oder Langformteilen durch eine Gehäusewandung oder eine Bauteilwandung, bestehend aus einer Hülse, die von einem Kabel oder Langformteil durchgriffen ist oder durchgreifbar ist, wobei die Hülse an einem ersten Endbereich einen Befestigungsansatz aufweist, der zum Beispiel durch die Lochung der Wandung montierbar ist, und einen Mittelbereich aufweist, der gegen den Mantel eines durchgesteckten Kabels oder Langformteils verquetschbar ist.

Kabeldurchführungen dieser Art sind im Stand der Technik bekannt. Bei diesen Kabeldurchführungen wird die Hülse zur Montage auf das entsprechende Kabel aufgeschoben, wobei es sich um ein normales Kabel mit Isolierumhüllung oder auch um ein Kabel mit Schirmung handeln kann. Sofern das Kabel mit Schirmung versehen ist, ist die Schirmung freigelegt und umgeschlagen, so dass sie am Mantel der vorzugsweise aus Metall bestehenden Hülse anliegt. Anschließend wird die Hülse mittig verquetscht, vorzugsweise weist die Hülse hierzu mittig einen umlaufenden Kragen oder einen umlaufenden Bund auf, der mittels eines geeigneten Werkzeuges verquetscht wird, so dass der Innenmantel der Hülse fest am Kabelmantel anliegt, so dass also die Kabeldurchführung zugfest und unlösbar ist. Gegebenenfalls kann die Verquetschung in Form einer Polygon-Kontur, zum Beispiel eines Sechskantes erfolgen. Solche Vorrichtungen haben sich im Stand der Technik an sich bewährt. Allerdings besteht ein Problem darin, dass diese Kabeldurchführungen bei unterschiedlichen Temperaturen nicht ausreichend feuchtedicht, insbesondere spritzwasserdicht sind. Es besteht ein Bedarf, solche Vorrichtungen derart auszugestalten, dass sie bei Temperaturen von -40 ° C bis +125 C spritzwasserdicht sind.

Zur Lösung dieser Aufgabe, also um eine Vorrichtung gattungsgemäßer Art zu schaffen, die spritzwasserdicht ist, wird vorgeschlagen, dass der dem Befestigungsansatz abgewandte zweite Endbereich in Montagesolllage einen ringartigen Dichtkörper aufnimmt, der sich am Mantel des durchgesteckten Kabels oder Langformteils abstützt.

Zur Montage kann der ringartige Dichtkörper entweder in eine entsprechende Ausnehmung im zweiten Endbereich der Hülse eingeschoben werden und anschließend kann das Kabel durchgeführt werden oder aber der Dichtkörper kann zunächst auf das Kabel aufgesetzt werden und die Hülse kann dann über den Dichtkörper geschoben werden. Nachfolgend erfolgt dann die Verquetschung des Mittelbereichs der Hülse. Damit ist eine weiterhin zugfeste und unlösbare Verbindung mit dem Kabel hergestellt, wobei durch den zusätzlichen ringartigen Dichtkörper eine Abdichtung gegen Spritzwasser erreicht wird.

Um insbesondere bei den möglichen
Temperaturunterschieden eine spritzwasserdichte Anordnung zu erreichen, ist zudem vorgesehen, dass der Dichtkörper einen am Kabelmantel anliegenden Ringbereich und von diesem abragende, umlaufende Dichtlamellen aufweist, die sich am Innenmantel des zweiten Endbereichs der Hülse abstützen.

Diese Dichtlamellen stützen sich am Innenmantel des zweiten Endbereichs der Hülse ab. Aufgrund der entsprechenden Anordnung und Bemessung ist somit ein Toleranzausgleich bei unterschiedlichen Temperaturen erreicht.

Besonders bevorzugt ist dabei vorgesehen, dass die Dichtlamellen in Montagesolllage zum freien Ende des zweiten Endbereichs geneigt abgewinkelt sind.

Hierdurch wird erreicht, dass die Dichtlamellen in der Montagesolllage elastisch vorgespannt geneigt abgewinkelt sind, so dass sie temperaturbedingten Bewegungen des zweiten Endbereichs der Hülse folgen können und eine Dichtigkeit im angegebenen Bereich dauerhaft erreicht wird.

Zudem ist vorgesehen, dass der Dichtkörper eine schlauchartige Verlängerung aufweist, die in Montagesolllage aus dem zweiten Endbereich der Hülse vorragt.

Durch diese Ausbildung wird erreicht, dass in der Montagesolllage die schlauchartige Verlängerung aus dem zweiten Endbereich der Hülse vorragt.

Für den Benutzer ist damit gut erkennbar, dass eine Dichtung angeordnet ist und dass die Dichtung richtig sitzt.

Zudem wird hierdurch erreicht, dass der Mantel des durchgeführten Kabels nicht durch die Endkante des zweiten Endbereichs der Hülse beschädigt werden kann.

Insbesondere ist vorgesehen, dass das freie Ende des zweiten Endbereiches in Montagesolllage zum Mantel des durchgesteckten Kabels hin umgeformt oder umgebördelt ist.

Durch diese Ausbildung wird eine unverlierbare Anordnung des Dichtkörpers im zweiten Endbereich der Hülse sichergestellt.

Um auch hierbei zu vermeiden, dass die durch Umformung gebildete Randkante am Mantel des Kabels Beschädigungen hervorrufen kann, ist vorgesehen, dass die durch die Umformung gebildete Randkante des zweiten Endbereichs der Hülse von der schlauchartigen Verlängerung des Dichtkörpers nach axial außen überragt ist.

In an sich bekannter Weise ist der
Befestigungsansatz der Hülse beispielsweise als Schweißbund ausgebildet, damit dieser Befestigungsansatz im Bereich des Gehäuseloches an die Wandung angeschweißt werden kann.

Alternativ kann der Befestigungsansatz auch Gewinde aufweisen, damit er in eine entsprechende Gehäusebohrung eingeschraubt werden kann oder durch eine Wandung gesteckt und mittels einer gegengeschraubten Mutter an der Wandung fixiert werden kann.

Ein Ausführungsbeispiel der Erfindung ist in der Zeichnung dargestellt und im Folgenden näher beschrieben. Es zeigt:
- Figur 1: eine erfindungsgemäße Hülse im Mittellängsschnitt gesehen;
- Figur 2: einen zugehörigen Dichtkörper ebenfalls im Mittellängsschnitt gesehen;
- Figur 3: die Vormontage des Dichteinsatzes auf einem durchgeführten Kabel mit umgelegter Abschirmung ebenfalls im Mittellängsschnitt gesehen;
- Figur 4: eine Vormontagelage, bei der die Hülse gemäß Figur 1, der Dichtkörper gemäß Figur 2 auf den entsprechenden Abschnitt eines durchgeführten Kabels aufgebracht ist;
- Figur 5: desgleichen in der Endposition mit verquetschtem Mittelteil der Hülse und umgebördelten Seitenendbereich der Hülse im Montagesolllage gesehen;
- Figur 6: ein Detail der Figur 5 im vergrößerten Maßstab.

In der Zeichnung ist eine Vorrichtung zur Durchführung von Kabeln 1 durch eine Gehäusewandung oder dergleichen Bauteilwandung gezeigt. Sie besteht aus einer Hülse 2, die in Montagesolllage von dem Kabel 1 oder dergleichen Teil durchgriffen ist. Die Hülse weist an einem ersten Endbereich 3 einen Befestigungsansatz auf, der zum Beispiel durch die Wandung des entsprechenden Bauteils montierbar ist oder an der Wandung im Bereich einer entsprechenden Lochung anschweißbar ist.

Ferner weist die Hülse 2 einen Mittelbereich 4 auf, der nach dem Durchstecken des Kabels 1 gegen den Mantel des durchgesteckten Kabels 1 verquetscht ist.

Erfindungsgemäß nimmt der den Befestigungsansatz 3 abgewandte zweite Endbereich 5, der Hülse 2 in Montagesolllage einen ringartigen Dichtkörper 6 auf, der sich in Solllage am Mantel des durchgesteckten Kabels 1 abstützt.

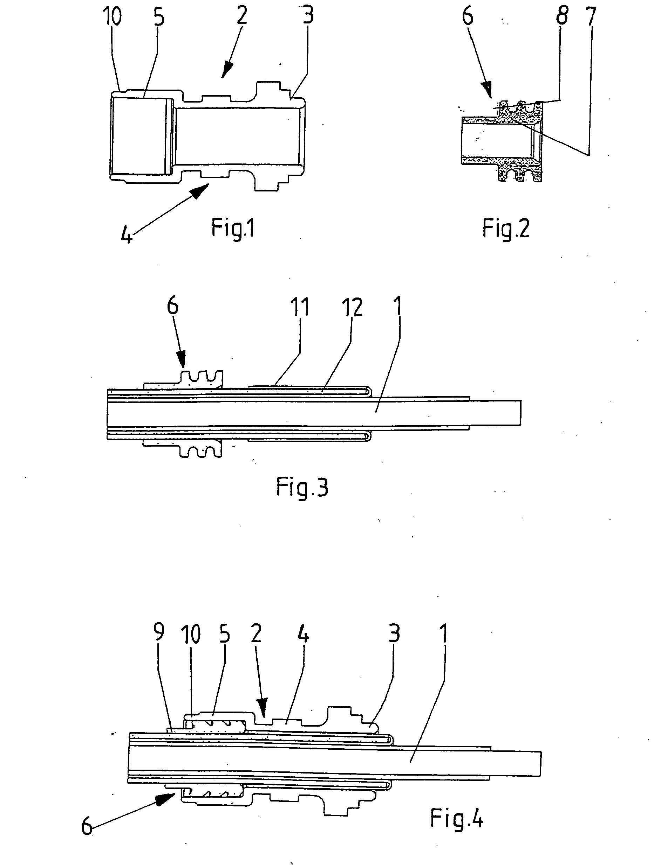

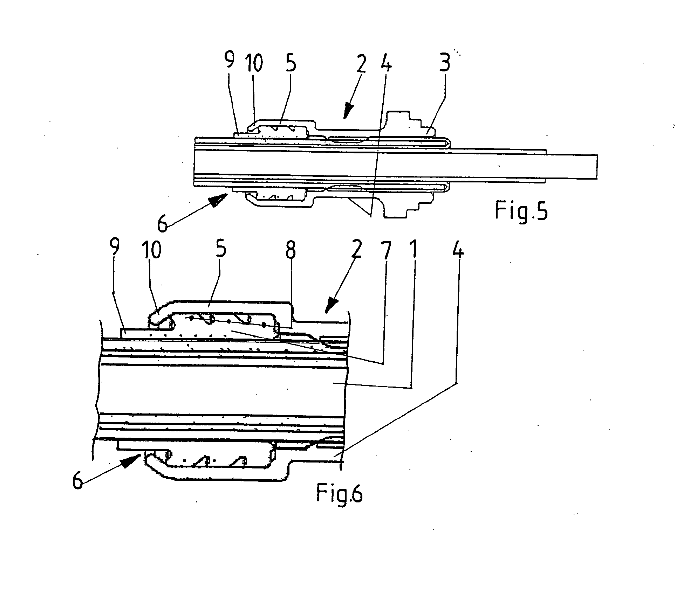

Vorzugsweise weist der Dichtkörper 6 einen am Kabelmantel anliegenden Ringbereich 7 und von diesem nach außen abragende umlaufende Dichtlamellen 8 auf, die sich in Montagesolllage am Innenmantel des zweiten Endbereichs 5 der Hülse 2 abstützen. In Figur 2 ist der Dichtkörper 6 mit den umlaufenden Dichtlamellen 8 in einer ungespannten Lage gezeigt. In der montierten Lage ist die Anordnung so getroffen, dass die Dichtlamellen 8 zum freien Ende des zweiten Endbereiches 5 hin, geneigt abgewinkelt sind, wie insbesondere aus Figur 4 und Figur 6 ersichtlich ist. Auf diese Weise wird eine vorzügliche Abdichtung und ein Toleranzausgleich bei auftretenden
Temperaturdifferenzen erreicht.

Der Dichtkörper 6 weist zudem eine schlauchartige Verlängerung 9 auf, die in Montagesolllage aus dem zweiten Endbereich 5 der Hülse 2 vorragt, wie beispielsweise in Figur 4 bis 6 ersichtlich ist. Zur endgültigen Montage wird das freie Ende 10 des zweiten Endbereiches 5 der Hülse 2 zum Mantel des durchgesteckten Kabels 1 hin umgeformt oder umgebördelt, wie insbesondere in Figur 6 ersichtlich ist. Hierdurch wird der Dichtkörper 6 unverlierbar gehalten. Die Anordnung ist dabei so getroffen, dass die durch die Umformung gebildete Randkante des zweiten Endbereiches 5 der Hülse 2 von der schlauchartigen Verlängerung 9 des Dichtkörpers 6 nach axial außen überragt ist, wie wiederum insbesondere aus den Figuren 4 bis 6 ersichtlich ist. Hierdurch wird erreicht, dass der Benutzer eine optisch erkennbare Anzeigehilfe hat, dass tatsächlich ein Dichtkörper 6 eingesetzt ist, wobei die Verlängerung 9 zusätzlich einen Schutz des Kabelmantels bildet, damit nicht das freie Ende 10 des zweiten Endbereiches 5 der Hülse 2 den Kabelmantel verletzen kann.

Zur Montage kann zunächst die Hülse 2 auf das Kabel 1 aufgeschoben werden und anschließend der Dichtkörper 6. Nachfolgend wird dann die Hülse 2 über den Dichtkörper 6 geschoben, so dass die Position erreicht ist, die in Figur 4 gezeigt ist. Nachfolgend wird dann der Mittelbereich 4 umgeformt und verquetscht, so dass eine zugfeste und unlösbare Verbindung zwischen den Teilen erreicht ist. Auch erfolgt dann die Umbördelung oder Umformung des freien Endes 10 des zweiten Endbereiches 5 in die Lage, die in Figur 5 und 6 gezeigt ist, um eine verliersichere Anordnung des Dichtkörpers 6 zu erreichen.

Wie in Figur 3 und 4 veranschaulicht ist, kann das Kabel 1 mit einer Abschirmung 11 versehen sein, die an einem Ende des Kabels 1 freigelegt und umgeschlagen ist, über die äußere
Isolierummantelung 12, so dass in
Montagesollzustand die Schirmung mit dem Innenmantel der Hülse 2 in Kontakt ist. Die Hülse 2 besteht aus elektrisch leitfähigem Werkstoff, beispielsweise Metall, so dass eine gewünschte elektrische Verbindung zwischen den Bestandteilen besteht.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung zur Durchführung von Kabeln (1) oder Langformteilen durch eine Gehäusewandung oder eine Bauteilwandung, bestehend aus einer Hülse (2), die von einem Kabel (1) oder Langformteil durchgriffen ist oder durchgreifbar ist, wobei die Hülse (2) an einem ersten Endbereich einen Befestigungsansatz (3) aufweist, der zum Beispiel durch die Lochung der Wandung montierbar ist, und einen Mittelbereich (4) aufweist, der gegen den Mantel eines durchgesteckten Kabels (1) oder Langformteils verquetschbar ist, **dadurch gekennzeichnet, dass** der dem Befestigungsansatz (3) abgewandte zweite Endbereich (5) in Montagesolllage einen ringartigen Dichtkörper (6) aufnimmt, der sich am Mantel des durchgesteckten Kabels (1) oder Langformteils abstützt.

2. Vorrichtung nach Anspruch 1, **dadurch gekennzeichnet, dass** der Dichtkörper (6) einen am Kabelmantel anliegenden Ringbereich (7) und von diesem abragende, umlaufende Dichtlamellen (8) aufweist, die sich am Innenmantel des zweiten Endbereichs (5) der Hülse (2) abstützen.

3. Vorrichtung nach Anspruch 2, **dadurch gekennzeichnet, dass** die Dichtlamellen (8) in Montagesolllage zum freien Ende des zweiten Endbereichs (5) geneigt abgewinkelt sind.

4. Vorrichtung nach einem der Ansprüche 1 bis 3, **dadurch gekennzeichnet, dass** der Dichtkörper (6) eine schlauchartige Verlängerung (9) aufweist, die in Montagesolllage aus dem zweiten Endbereich (5) der Hülse (2) vorragt.

5. Vorrichtung nach einem der Ansprüche 1 bis 4, **dadurch gekennzeichnet, dass** das freie Ende (10) des zweiten Endbereiches (5) in Montagesolllage zum Mantel des durchgesteckten Kabels (1) hin umgeformt oder umgebördelt ist.

6. Vorrichtung nach Anspruch 5, **dadurch gekennzeichnet, dass** die durch die Umformung gebildete Randkante (10) des zweiten Endbereichs (5) der Hülse (2) von der schlauchartigen Verlängerung (9) des Dichtkörpers (6) nach axial außen überragt ist.
